# EUROPEAN PATENT SPECIFICATION

(11) **EP 0 696 143 B1**
(45) Date of publication and mention of the grant of the patent: **09.01.2002**
(21) Application number: 95116330.2
(22) Date of filing: 09.08.1991
(51) Int. Cl.: H04N 9/79

(54) **Video signal recording and/or reproducing systems**
Fernsehsignalaufnahme und -wiedergabesysteme
Systèmes d'enregistrement et de reproduction de signal vidéo

(30) Priority: 17.08.1990 US 569029; 02.01.1991 US 635197
(43) Date of publication of application: 07.02.1996
(62) Divisional of application: 91307342.5
(73) Proprietor: Samsung Electronics Co., Ltd., Suwon-city, Kyungki-do (KR)
(72) Inventor: Strolle, Christopher H., Pennsylvania 19038 (US); Patel, Chandrakant B., Hopewell, New Jersey 08525-9601 (US); Wedam, Werner F., Lawrenceville, New Jersey 08648 (US); Ko, Jung-Wan, Suwon-city (KR); Schnitzler, Raymond, San Francisco, CA 94117 (US); Yun, Jong-Kyung, Suwon-city, Kyounggi-do (KR)
(74) Representative: Grünecker, Kinkeldey, Stockmair & Schwanhäusser Anwaltssozietät

(56) References cited:
- EP-A- 0 379 766
- JOURNAL OF THE BRITISH INSTITUTION OF RADIO ENGINEERS, February 1960 LONDON GB, pages 127-136, E. A. HOWSON ET AL. 'Reduction of Television Bandwidth by Frequency-Interlace.'

## Description

The present invention relates to video signal processing systems and is concerned particularly although not exclusively with a signal processing system for a video cassette recorder (VCR). The invention is divided out from EP-B1-0 471 517 directed to a video signal recording system for recording a full bandwidth video signal on a limited bandwidth medium.

The reader's attention is directed to the following British Patent Applications, which contain subject-matter related to that of the present specification. Copies of the specifications of these British Patent Applications are filed concurrently with the present European Patent Application.
1. GB 91 08683.5 (Publication No. GB 2 245 448 A) filed 23.04.91 and claiming priority from U.S. Patent Application No. 07/531,057 filed 31.05.90.
2. GB 91 08836.9 (Publication No. GB 2 244 888 A) filed 24.04.91 and claiming priority from U.S. Patent Application No. 07/531,070 filed 31.05.90.
3. GB 91 09732.9 (Publication No. GB 2 246 926 A) filed 04.05.91 and claiming priority from U.S. Patent Application No. 07/562,907 filed 06.08.90.
4. GB 91 10020.6 (Publication No. GB 2 246 264 A) filed 09.05.91 and claiming priority from U.S. Patent Application No. 07/531,144 filed 31.05.90.

Current home VCRs record video information onto video tape cassettes in one of several formats. The well-known VHS system produces degraded picture quality chiefly because there is insufficient horizontal resolution. An enhanced VHS system, popularly called Super VHS (S-VHS), produces enhanced picture quality by recording a full bandwidth video signal on the video tape cassette, thus yielding improved picture quality. Such a system requires higher quality tape in the cassette and higher quality recording and playback mechanisms and circuitry. However, the S-VHS system is not backward compatible with standard VHS VCRs. That is, although a S-VHS VCR can play back cassettes recorded on either S-VHS or standard VHS VCRs, a standard VHS VCR cannot play back cassettes recorded on S-VHS VCRs.

It has long been a goal of video engineers to increase the amount of information transmitted through a given narrowband channel, such as NTSC, which is limited to 4.2 MHz of bandwidth. Because the frame and line rates are usually fixed, restricting the bandwidth translates into restricting the horizontal resolution. In some cases, the bandwidth of the channel is limited to 3 MHz or even 2.5 MHz, resulting in an image with insufficient horizontal resolution.

It has been long recognized that the video spectrum has holes in which the signal energy is very small. The NTSC color system represents a system which uses one of these holes to carry the color information. In the NTSC system, the color information is recorded on a color subcarrier whose frequency is very carefully selected so that minimum disturbance occurs when a color signal is displayed on a black and white receiver. Specifically, the frequency of the color subcarrier is interleaved horizontally, vertically, and temporally to minimize the crosstalk between the luminance and chrominance components of the composite video signal.

It was recognized at around the time of the adoption of the NTSC system that such frequency holes could also be used to transmit additional horizontal information to increase the horizontal resolution of the reproduced image. In these systems, the high frequency horizontal information was interleaved with the low frequency horizontal information in a similar manner as the chrominance information is in the NTSC color system. An article titled "REDUCTION OF TELEVISION BANDWIDTH BY FREQUENCY INTERLACE" by Howson contains a description of such a system which operated in the analog domain. This system, however, could not accurately reproduce the full bandwidth image in its original form because it was unable to completely remove the artifacts resulting from the frequency interleaving, which manifested themselves as annoying dot crawl patterns.

Sampled data digital video signal processing techniques were later developed using subNyquist sampling (sometimes termed subsampling) to address the problem. These techniques involved replacing every odd sample in a first video line with a zero valued sample, and then on the next line, replacing every even sample with a zero valued sample. On alternate frames, the patterns are reversed.

German Patent Application 82100286.2 entitled "Verfahren zum Ubertagen von Fernsehsignalen uber einen genormten bandbreitebegrenzten Ubertragunskanal und Anordnung zum Durchfuhren des Verfahrens," filed January 1, 1982 by Professor Wendland et al, describes principles of offset subsampling and bandwidth compression as applied to advanced television systems. This patent application also describes techniques for implementing television systems in accordance with the described principles.

Theoretically, the Howson frequency folding technique and the subNyquist sampling technique are equivalent. But, although theoretically equivalent, the later sampled data digital systems provided improved reconstruction of the received image because of the existence of line and frame combing techniques, which had not been developed at the time of the Howson system. The subNyquist sampling techniques, however, were developed for totally sampled data digital systems as data reduction techniques. Signals generated by these systems were not intended to be passed through a narrowband analog channel.

In an article "DEVELOPMENT OF HDTV RECEIVING EQUIPMENT BASED ON BAND COMPRESSION TECHNIQUE (MUSE)", by Kojima et al. in IEEE Transactions on Consumer Electronics, Vol. CE-32, No. 4, Nov. 1986, pp. 759-768, another data compression scheme is described which achieves bandwidth compression by sampling each pixel once every other frame. This scheme works well for nonmoving images. For moving images, a motion vector is developed, and the actual rate of sampling of each pixel is adaptively varied in response to the motion vector so that a sample of the pixel is transmitted every other frame on the average, but more often when that pixel is representing a moving image.

U.S. Patent 4,831,463, issued May 16, 1989 to Faroudja, describes apparatus for processing a video signal having a predetermined bandwidth in order to pass the video information through a limited bandwidth channel, such as magnetic tape. In the apparatus described in this patent, a video signal preprocessor includes a comb filter to produce a spectral hole, such as described above, between spectrally active areas in the video signal spectrum. A folding circuit folds the high frequency video components of the video signal about a predetermined folding frequency selected so that the folded high frequency component is placed in the spectral hole previously made in the video signal. A low pass filter then filters the resulting folded video signal so that its bandwidth is about 1/2 the bandwidth of the original video signal. The resulting signal may then be transmitted through the limited bandwidth channel.

This patent further describes a post processor which receives a folded signal from the limited bandwidth channel. The post processor includes an unfolding circuit which unfolds the received signal about a predetermined unfolding frequency. A comb filter then processes the unfolded signal to remove the alias components resulting from the unfolding process. The signal produced by this comb filter closely approximates the originl video signal in terms of the bandwidth and information content.

Both the Howson article and the Faroudja patent describe folding systems which, if incorporated into an improved VCR, would not produce cassettes which would be able to be played back on present VCRs without introducing unacceptable artifacts. This is primarily due to the magnitude of the folded high frequency component present within the low frequency component, on the previously recorded cassette. The magnitude of the folded high frequency component is sufficiently high as to introduce intolerable artifacts into an image produced from a video signal from which the folded high frequency component were not properly removed.

It is the object of the invention to provide an improved video signal processing system for a wide bandwidth video signal.

This is achieved by the teaching of claim 1 for the recording of a wide bandwidth video signal on a limited bandwidth recording medium and by the teaching of claim 3 for the conversion into a wide bandwidth video signal.

For a better understanding of the invention, and to show how the same may be carried into effect, reference will now be made, by way of example, to the accompanying diagrammatic drawings, in which:
Figure 1 is a block diagram of the record section of one example of a video recorder embodying the present invention;
Figure 2 is a block diagram of an encoder which may be a part of the record section of Figure 1;
Figure 3 is a more detailed block diagram of a portion of the encoder illustrated in Figure 2;
Figures 4a and 4b are respective block diagrams of alternative examples of a portion of the encoder illustrated in Figure 3;
Figure 5 is a more detailed block diagram of a portion of the encoder illustrated in Figure 3;
Figure 6 is a block diagram of an adaptive folding circuit which is a part of the encoder of Figure 2;
Figure 7 is an alternative embodiment of a portion of the adaptive folding system illustrated in Figure 6;
Figure 8 is a block diagram of a playback section of one example of a video recorder embodying the present invention;
Figure 9 is a more detailed block diagram of a decoder in the playback section illustrated in Figure 8;
Figure 10 is a more detailed block diagram of a portion of an adaptive unfolding circuit illustrated in Figure 9; and
Figure 11 is a more detailed block diagram of another portion of the adaptive unfolding circuit illustrated in Figure 9.

In the Figures, equalizing delays have been omitted for the purposes of simplicity. One skilled in the art of video signal processor design will appreciate the need for such delays to properly time align pixels subject to different delays on different processing paths due to the differing processing performed in those paths. One skilled in the art would understand where such delays would be necessary and how long each of the delays would have to be, and such delays will not be discussed below.

In addition, in the Figures, various filters are used for filtering in the horizontal, vertical, and temporal directions, having both high pass and low pass response characteristics. One skilled in the art of video signal processor design will appreciate that such filters may be constructed as known comb filter designs, and would understand how to properly select the delay period of the delay lines, the number of taps and the weighing of the taps. Consequently, the detailed design of such comb filters will not be discussed below, unless such a design is important for other reasons.

Also, in the Figures, and the detailed description below, various embodiments of the present invention are directed to an NTSC video signal. One skilled in the art would understand how to modify the embodiments in order to process a PAL video signal, a SECAM video signal or a video signal according to any other standard. Such alternative embodiments may also be in accordance with principles of the present invention.

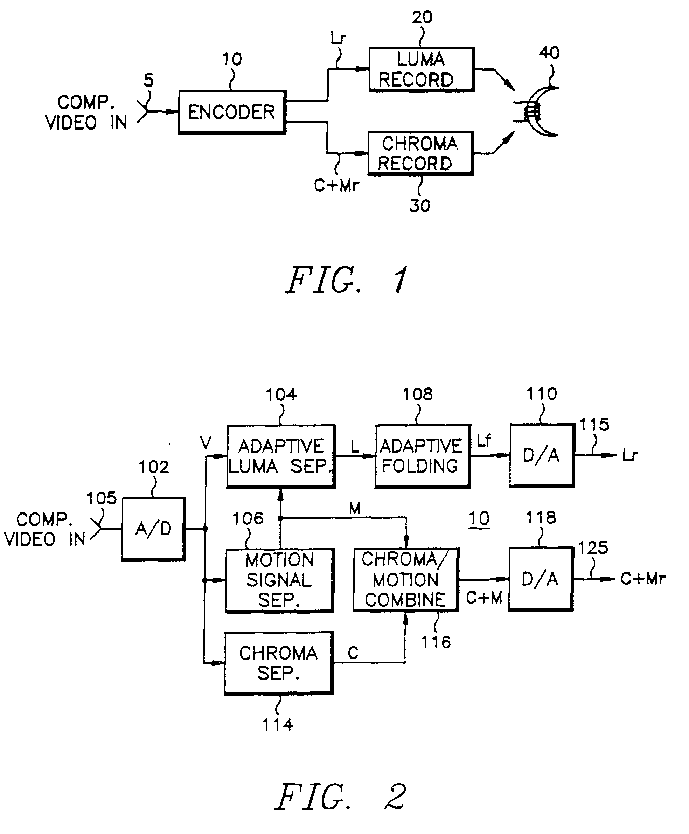

In Figure 1, a portion of the record section of one example of a video signal recorder embodying the present invention comprises an input terminal 5 which is coupled to a source (not shown) of a video signal; for example, an NTSC composite video signal. Input terminal 5 is coupled to an input terminal of an encoder 10. A first output terminal of encoder 10 is coupled to an input terminal of a luminance record circuit 20, similar to those found in present VCRs. An output terminal of the luminance record circuit 20 is coupled to a record head 40 in a standard tape transport mechanism, similar to those found in present VCRs. A second output terminal of encoder 10 is coupled to an input terminal of a chrominance record circuit 30, similar to those found in present VCRs. An output terminal of the chrominance record circuit 30 is also coupled to the record head 40. The record head records the signal supplied to it onto magnetic tape (not shown) in a standard video cassette.

In operation, the encoder 10 takes a standard full-bandwidth NTSC signal and generates a luminance signal Lᵣ, which has the same reduced bandwidth as a standard luminance signal produced by a present VCR, but has a component with a reduced amplitude high frequency component folded into it. The luminance signal Lᵣ, thus, contains all of the information from the full-bandwidth NTSC signal, within the reduced bandwidth which can be recorded on the cassette. This allows standard quality cassettes and record and playback mechanisms to be used. In addition, the reduced amplitude of the folded high frequency signal will not cause objectionable artifacts if the recorded cassette is subsequently played back on a standard VCR. The luminance record circuit 20 records the Lᵣ signal in exactly the same manner as the reduced bandwidth luminance signal is recorded in a standard VCR. In a VHS VCR, for example, this signal is FM modulated and occupies a band of frequencies around 1.4 - 5.9 MHz.

The encoder 10 also produces a composite signal C+Mᵣ to be supplied to the chrominance record circuit 30. This composite signal includes the standard chrominance signal (C) as one component, and a motion representative signal (Mr) as another component. The motion representative signal component may be used to process the unfolded luminance signal during the playback processing, in a manner described below. The chrominance record circuit 30 records the C+Mᵣ signal in exactly the same manner as the chrominance signal is recorded in a standard VCR. In a VHS VCR, this signal is modulated to about 629 kHz. This chrominance signal is combined with the luminance signal (described above) and recorded on the video tape in the cassette.

Figure 2 is a more detailed block diagram of the encoder 10 illustrated in Figure 1. In Figure 2, an input terminal 105 is coupled to input terminal 5 (of Figure 1). Input terminal 105 is coupled to an input terminal of an analog-to-digital converter (A/D) 102. An output terminal of A/D 102 is coupled to respective input terminals of an adaptive luminance signal separator 104, a motion signal separator 106 and a chrominance signal separator 114. An output terminal of the adaptive luminance signal separator 104 is coupled to an input terminal of an adaptive folding circuit 108. An output terminal of the adaptive folding circuit 108 is coupled to an input terminal of a digital-to-analog converter (D/A) 110. An output terminal of D/A 110 is coupled to a first output terminal 115. Output terminal 115 is coupled to the input terminal of the luminance record circuit 20 (of Figure 1).

An output terminal of the motion signal separator 106 is coupled to a control input terminal of the adaptive luminance signal separator 104 and a motion signal input terminal of a chrominance/motion signal combining circuit 116. An output terminal of the chrominance signal separator 114 is coupled to a chrominance signal input terminal of the chrominance/motion signal combining circuit 116 which is coupled to an input terminal of a second digital-to-analog converter (D/A) 118. An output terminal of D/A 118 is coupled to an output terminal 125. Output terminal 125 is coupled to the input terminal of the chrominance record circuit 30 (of Figure 1).

In operation, the encoder of Figure 2 first converts the composite video signal at input terminal 105 to a sampled data multibit digital composite video signal V using A/D 102. The sampling frequency is selected in a manner more fully described below. For an NTSC signal, the sampling frequency may be selected to be about 10 MHz, for example. Signal V is supplied to the adaptive luminance separator 104, which extracts the luminance component L; to the motion signal separator 106, which extracts a motion representative signal M; and to a chrominance signal separator 114, which extracts the chrominance signal component C.

The extracted luminance signal L is further processed by the adaptive folding circuit 108. This circuit folds attenuated high frequency components of the luminance signal L back into lower frequency components, and filters the resulting signal so that all the information in the full-bandwidth luminance signal L is contained in a folded luminance signal L_{f} which has a bandwidth of about 2.5 MHz. The adaptive folding circuit 108 will be described in more detail below. The folded luminance signal L_{f} is converted to an analog signal Lᵣ in D/A 110. This signal is in a form which can be recorded on a video cassette by the luminance recording circuitry 20 (of Figure 1).

The extracted motion signal M and the extracted chrominance signal C are combined into a single composite signal C+M in the chrominance/motion signal combining circuit 116. A chrominance/auxiliary signal combining circuit, which may be used as the chrominance/motion signal combining circuit 116, is described in more detail in the above-mentioned Patent Application GB 91 08836.9 (Publication No. GB 2 244 888 A). The C+M signal is converted into an analog signal C+Mr by D/A 118. This signal is in a form which can be recorded on a video cassette the standard chrominance recording circuitry 30 (of Figure 1).

As is known in the video signal processing art, frame comb low pass filters (temporal low pass filters) may be used to extract the luminance component with no loss of spatial resolution. However, in the presence of motion, artifacts are introduced into the frame comb extracted luminance signal. Line comb low pass filters (vertical comb low pass filters) may also be used to extract the luminance component, even in the presence of motion. However, luminance extracted by line combing has decreased diagonal resolution. It is preferable to extract the luminance signal using frame comb filtering, unless there is motion in an area of the image, in which case, it is preferable to use line comb filtering in that area.

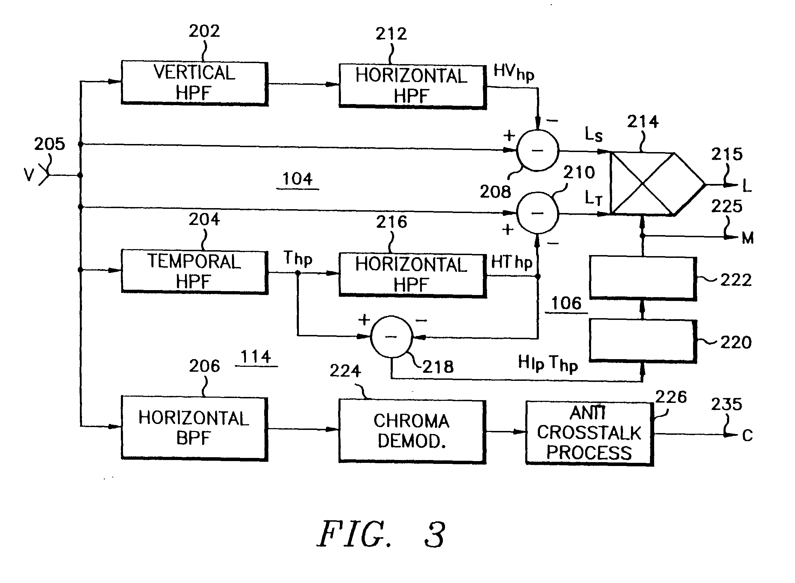

Figure 3 is a more detailed block diagram of a portion of encoder 10 illustrated in Figure 2. In Figure 3, an input terminal 205 is coupled to the output terminal of the A/D 102 (of Figure 2). Input terminal 205 is coupled to respective input terminals of a vertical high pass filter (HPF) 202, a temporal high pass filter (HPF) 204, a horizontal band pass filter (BPF) 206 and to respective minuend input terminals of subtractors 208 and 210. An output terminal of the vertical HPF 202 is coupled to an input terminal of a horizontal high pass filter (HPF) 212. An output terminal of horizontal HPF 212 is coupled to a subtrahend input terminal of subtractor 208. An output terminal of subtractor 208 is coupled to a first data input terminal of a soft switch 214. An output terminal of soft switch 214 is coupled to an output terminal 215. Output terminal 215 is coupled to the input terminal of the adaptive folding circuit 108 (of Figure 2).

An output terminal of temporal HPF 204 is coupled to an input terminal of a horizontal high pass filter (HPF) 216 and to a minuend input terminal of a subtractor 218. An output terminal of horizontal HPF 216 is coupled to respective subtrahend input terminals of subtractors 210 and 218. An output terminal of subtractor 210 is coupled to a second data input terminal of soft switch 214.

An output terminal of subtractor 218 is coupled to an input of a signal magnitude detector 220. An output terminal of magnitude detector 220 is coupled to an input terminal of a signal spreader 222. An output terminal of signal spreader 222 is coupled to an output terminal 225 and to a control input terminal of soft switch 214. Output terminal 225 is coupled to the motion signal input terminal of chrominance/motion signal combining circuit 116 (of Figure 2).

An output terminal of horizontal BPF 206 is coupled to an input terminal of a chrominance signal demodulator 224. An output terminal of chrominance signal demodulator 224 is coupled to an input terminal of an anti-crosstalk processor 226. An output terminal of anti-crosstalk processor 226 is coupled to an output terminal 235. Output terminal 235 is coupled to a chrominance signal input terminal of chrominance/motion signal combining circuit 116 (of Figure 2).

In operation, a horizontally and vertically high pass filtered signal HVₕₚ, produced by the serially coupled vertical HPF 202 and horizontal HPF 212, contains all the chrominance information present in the composite video signal V in addition to all the spatial detail information. This information is subtracted from the composite video signal by subtractor 208, to produce a spatially derived luminance signal. The spatially derived luminance signal Lₛ, produced by subtractor 208, therefore, contains only luminance information, but has reduced diagonal resolution. A temporally and horizontally high pass filtered signal HTₕₚ, produced by the serially coupled temporal HPF 204 and horizontal HPF 216, also contains all the chrominance information present in the composite video signal V, in addition to all the temporal detail information. This information is subtracted from the composite video signal by subtractor 210, to produce a temporally derived luminance signal L_{T}. The temporally derived luminance signal L_{T}, produced by subtractor 210, therefore, contains only luminance information at full spatial resolution, but has reduced temporal resolution.

The temporally high pass filtered signal Tₕₚ from the temporal HPF 204 contains motion information at horizontal low frequencies and chrominance information at high luminance frequencies. Thus, the output signal HTₕₚ from the horizontal HPF 216 is subtracted from the temporally high pass filtered signal Tₕₚ to form a horizontal low pass filtered, temporally high pass filtered signal HₗₚTₕₚ, which is a bipolar motion representative signal. This signal varies as a function of both the magnitude of the motion in the image (that is, the faster the motion, the larger the signal) and the contrast of the moving portion of the image. This signal has greatest magnitude at the edges of objects having large contrast with respect to the background against which they are moving. Where the background and moving object are close in intensity, the motion signal is weak. In addition, quick moving objects with soft edges also produce a weak motion signal. Finally, even with quick moving high contrast objects, the motion signal is usually only strong within several pixels of the moving edge.

In order to minimize the effect of these variations in the signal, magnitude detector 220 detects the magnitude of the motion signal from the subtractor 218 and produces a single bit signal indicating either the presence or absence of motion for that pixel. A known magnitude detector 220 may include a multiplexer having a control input terminal responsive to a sign bit of the applied motion signal. The motion signal HₗₚTₕₚ would be coupled to a first input terminal of the multiplexer and an input terminal of an arithmetic negator circuit. An output terminal of the arithmetic negator circuit would be coupled to a second input terminal of the multiplexer. The output terminal of the multiplexer produces the magnitude (absolute value) of the motion signal. If the sign bit is a logic '0', indicating, for example, that the motion signal value is positive, then the multiplexer couples the first input terminal, carrying the motion signal, to the output terminal. If the sign bit is a logic '1', indicating that the motion signal value is negative, then the multiplexer couples the second input terminal, carrying the arithmetic negative of the motion signal (which would be a positive valued signal) to the output terminal.

This magnitude signal is then supplied to a known comparator circuit. The comparator circuit compares the magnitude signal to a predetermined threshold value. If the magnitude signal exceeds the threshold value, then the comparator circuit produces an output signal which is a logic '1' signal. If the magnitude signal is less than the threshold value, then the comparator circuit produces an output signal which is a logic '0' signal. The output of this comparator is a single bit signal which is a logic '1' in the presence of motion, and a logic '0' otherwise.

This single bit motion signal is spread vertically and horizontally by signal spreader 222. Alternatively, the signal may be spread temporally, vertically and horizontally by signal spreader 222. Apparatus for spreading such single bit motion representative signal is described in the above-mentioned Patent Application GB 91 08683.5 (Publication No. GB 2 245 448 A). The spread motion signal M, produced by signal spreader 222, is a multibit digital signal whose value gradually decreases from a maximum value in moving areas (as indicated by the single-bit bi-level signal having a logic '1' value) to a zero valued signal in the area around the moving area in the vertical and horizontal directions (and optionally, temporally). This motion signal M is used by other portions of the encoder for adaptively processing the video signal V.

As described above, in the absence of motion, the luminance signal L is preferably the temporally derived luminance signal L_{T}; but in the presence of motion, the luminance signal L is preferably the spatially derived luminance signal Lₛ. Soft switch 214 will continuously vary the proportion of the two input signals L_{T} and Lₛ in response to the value of the motion signal M. If the value of the motion signal M is zero, or nearly zero, indicating no or a low level of motion, then the soft switch produces an output signal L which is completely L_{T}. If the value of the motion signal M is at a maximum, or nearly maximum, indicating a high level of motion, then the soft switch 214 produces an output signal L which is completely Lₛ. At intermediate values of the motion signal M, the output signal contains some proportion of each of the input signals L_{T} and Lₛ. The operation of soft switch 214 will be described in more detail below.

The modulated chrominance component C is extracted from the composite video signal V in a known manner using the horizontal BPF 206. The chrominance signal is demodulated to baseband by chrominance signal demodulator 224. The baseband chrominance signal is processed to reduce adjacent track crosstalk by anti-crosstalk element 226. Anti-crosstalk element 226 may be, for example, a vertical low pass filter, which may be implemented as a two-tap line comb low pass filter.

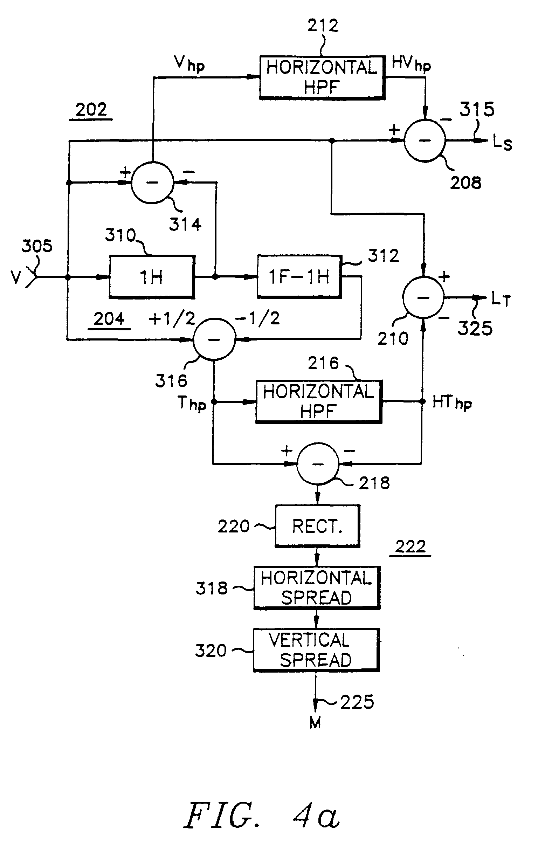

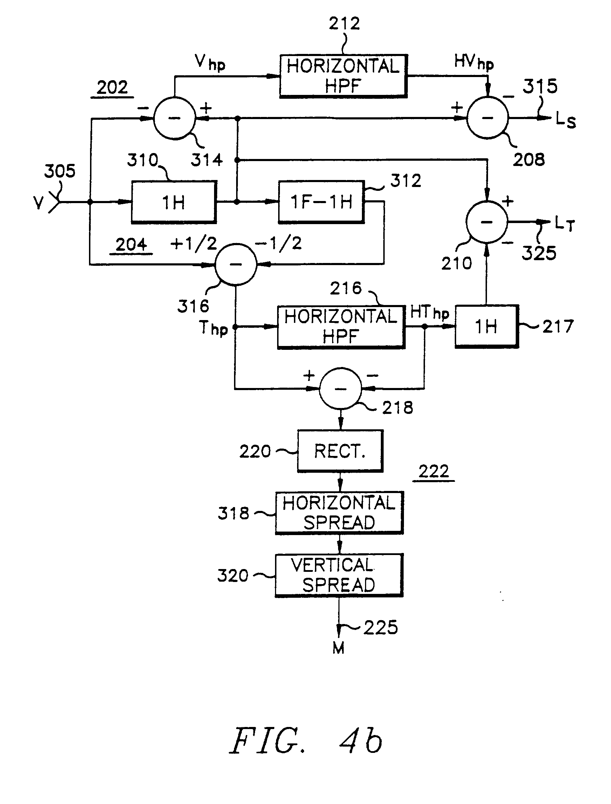

In Figure 3, the vertical HPF 200 and temporal HPF 204 are both responsive to the composite video signal V. Because they are implemented as comb filters, they can share delay lines. Figures 4a and 4b are more detailed block diagrams illustrating the apparatus of Figure 3 in a more efficiently constructed form, sharing delay lines, whenever possible. Figure 3 illustrates a portion of encoder 10 which is preliminary applicable for processing an NTSC video signal. One skilled in the art would understand how to construct an equivalent encoder 10 for processing a PAL video signal, a SECAM video signal or a video signal according to any other standard. In Figure 4a, elements which are the same as those in Figure 3 have the same reference number, and are not described again in detail below.

In Figures 4a and 4b an input terminal 305 is coupled to the output terminal of A/D 102 (of Figure 2). Input terminal 305 is coupled to respective minuend input terminals of subtractors 208, 210, 314, and a weighted subtractor 316 whose input is weighted by 1/2; and an input terminal of serially coupled delays devices 310 and 312. Delay device 310 produces a signal at its output terminal which is the signal at its input terminal delayed by a period of time equal to one horizontal scan period (1H). Delay device 312 produces a signal at its output terminal which is the signal at its input terminal delayed by a period of time equal to one frame scan period less one horizontal scan period (1F-1H). An output terminal of 1F-1H delay device 312 is coupled to a subtrahend input terminal of weighted subtractor 316, whose input is weighted -1/2. The combination of delay devices 310 and 312 and weighted subtractor 318 forms temporal HPF 204 as a two-tap frame high pass comb filter of known design producing signal Tₕₚ.

An output terminal of 1H delay device 310 is coupled to a subtrahend input terminal of subtractor 314. The combination of 1H delay device 310 and subtractor 314 forms vertical HPF 202 as a two tap line comb filter of known design producing signal Tₕₚ.

An output terminal of subtractor 218 is coupled to serially coupled rectifier 220, horizontal spreader 318 and vertical spreader 320. The combination of rectifier 220, horizontal spreader 318 and vertical spreader 320 forms signal spreader 222 (of Figure 3) and operates as described above.

The remainder of Figure 4a is the same as illustrated in a portion of Figure 3 and described above except that Figure 3 does not purport to show timing accuracy. The horizontal HPFs 212 and 216 may be standard digital high pass filters each having a break frequency at around 2 MHz. A 15-tap horizontal comb high pass filter is preferred, yielding a response characteristic which is -6dB at 1.75 MHz.

Figure 4b illustrates another more detailed block diagram of the apparatus illustrated in Figure 3. In Figure 4b, elements which are similar to those in Figure 4a have the same reference number, and are not described in detail below.

In Figure 4b, input terminal 305 is coupled to a subtrahend input terminal of a subtractor 314, a subtrahend input terminal of a weighted subtractor 316 whose input is weighted by 1/2 and an input terminal of serially coupled 1H delay device 310 and 1F-1H delay device 312. An output terminal of 1H delay terminal 310 is coupled to respective minuend input terminals of subtractors 208, 210 and 314. The combination of 1H delay device 310 and subtractor 314 forms vertical HPF 202 as a two tap line comb filter of known design producing signal Vₕₚ.

An output terminal of 1F-1H delay device 312 is coupled to a subtrahend input terminal of weighted subtractor 316 whose input is weighted by 1/2. The combination of delay devices 310 and 312 and weighted subtractor 316 forms temporal HPF 204 as a two tap frame high pass comb filter of known design producing signal Tₕₚ.

An output terminal of weighted subtractor 316 is coupled to an input terminal of horizontal HPF 216 and a minuend input terminal of subtractor 218. An output terminal of horizontal HPF 216 is coupled to an input terminal of a second 1H delay device 217 and a subtrahend input terminal of subtractor 218. An output terminal of 1H delay device 217 is coupled to a subtrahend input terminal of subtractor 210. The remainder of Figure 4b is the same as illustrated in Figures 3 and 4a.

In operation, the embodiment of Figure 4b differs from that of Figure 4a in the timing. In Figure 4a, the pixel at the input terminal 305 may be considered as the 'current pixel'. The current pixel is the pixel from which is subtracted, in subtractors 208 and 210, the spatially and temporally high pass filtered pixels from horizontal HPF 212 and horizontal HPF 216, to form the spatially and temporally low pass filtered pixel signals L_{S} and L_{T} respectively. In addition, the current pixel is the pixel from which is subtracted the pixel displaced in time by the 1H delay device 310 to form the vertical high pass filtered pixel signal Vₕₚ.

In Figure 4b, however, the current pixel is taken from the output terminal of 1H delay device 310. It is this pixel from which is subtracted the spatially and temporally high pass filtered pixels, from horizontal HPF 212 and horizontal HPF 216, to form the spatially and temporally low pass filtered pixel signal L_{S} and LT, respectively. In order to equalize the delay introduced by 1H delay device 310 to the current pixel, the 1H delay device 217 is included in the signal path of the temporally high pass filtered signal HTₕₚ from horizontal HPF 216. In addition, the current pixel is the pixel from which is subtracted the pixel displaced in time by the 1H delay device 310 to form the vertical high pass filtered pixel signal Vₕₚ.

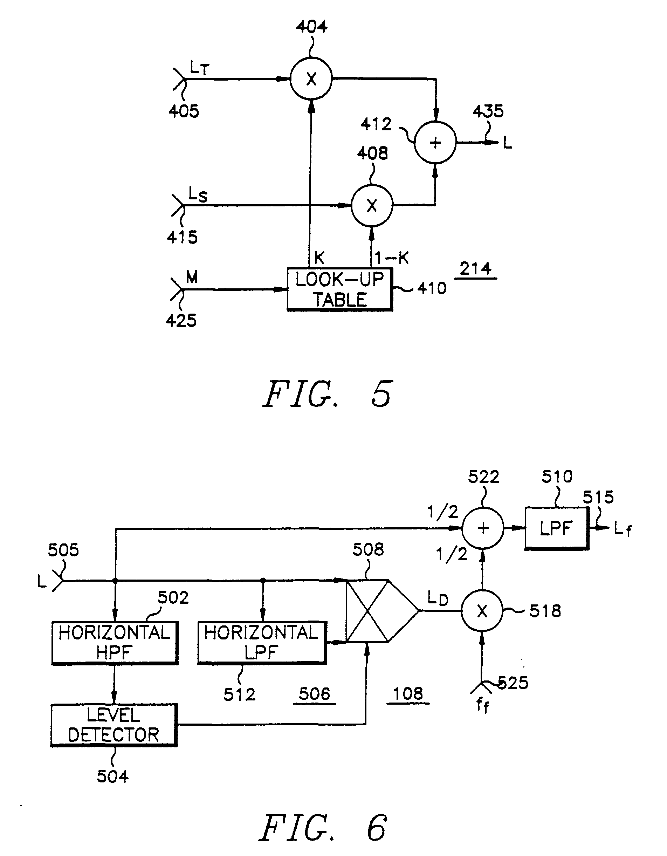

Figure 5 is a more detailed block diagram of the soft switch 214 illustrated in Figure 3. In Figure 5, an input terminal 405 is coupled to the output terminal of subtractor 208 (of Figure 3). Input terminal 405 is coupled to a first input terminal of a multiplier 404. An output terminal of multiplier 404 is coupled to a first input terminal of an adder 412. An output terminal of adder 412 is coupled to an output terminal 435. Output terminal is coupled to the adaptive folding circuit 108 (of Figure 2).

An input terminal 415 is coupled to an output terminal of subtractor 210 (of Figure 3). Input terminal 415 is coupled to a first input terminal of a multiplier 408. An output terminal of multiplier 408 is coupled to a second input terminal of adder 412. An input terminal 425 is coupled to an output terminal of signal spreader 222 (of Figure 3). Input terminal 425 is coupled to an input terminal of look-up table 410. A first output terminal of look-up table 410 is coupled to a second input terminal of multiplier 404, and a second output terminal of look-up table 410 is coupled to a second input terminal of multiplier 408.

In operation, multiplier 404 scales the temporally derived luminance signal L_{T} by the scaling factor K, and multiplier 408 scales the spatially derived luminance signal Lₛ by the scaling factor 1-K. Adder 412 sums the two scaled signals to produce the luminance signal L.

The spread motion signal M from input terminal 425 is applied to the input of look-up table 410. Look-up table produces two scaling factors which are related to the value of the control signal M. The first scaling factor K is the proportion of the temporally derived luminance signal L_{T} which should be in the luminance output signal L. The second scaling factor 1-K is the proportion of the spatially derived luminance signal Lₛ which should be in the luminance output signal L. The sum of K and 1-K is one. The function K(M) is selected such that when M is zero or nearly zero (low level of motion), K is one (all temporally derived luminance) and 1-K is zero (no spatially derived luminance); and when M is maximum or nearly maximum (high level of motion), K is zero (no temporally derived luminance) and 1-K is one (all spatially derived luminance). The function K(M) is continuous and may be linear or non-linear. As the value of the motion signal M gradually changes from zero to maximum, the proportion of the temporally derived luminance signal L_{T} gradually decreases and the proportion of the spatially derived luminance signal Lₛ gradually increases.

Look-up table 410 may be implemented in known manner as a multibit read-only memory (ROM) having input terminal 425 coupled to its address input terminals. A first subset of its data output terminals are coupled to the K signal input terminal of multiplier 404, and a second subset are coupled to the 1-K signal input terminal of multiplier 408.

In operation, the storage locations of the ROM are accessed by the motion signal M at the address input terminals where each separate value which the M signal can assume accesses a different storage location. Each storage location has a first portion (which is coupled to the second subset of data output terminals) preprogrammed with the K value corresponding to the M value which accesses that location, and a second portion (which is coupled to the second subset of data output terminals) preprogrammed with the 1-K value corresponding to that value of the motion signal M.

Figure 6 is a block diagram of the adaptive folding circuit 108 as illustrated in Figure 2. In Figure 6, an input terminal 505 is coupled to the output terminal of the adaptive luminance separator 104 (of Figure 2). Input terminal 505 is coupled to an input terminal of a horizontal high pass filter (HPF) 502, an input terminal of a horizontal low pass filter (LPF) 512, a first input terminal of a weighted adder 522 whose input signal is weighted by 1/2 and a first data input terminal of a soft switch 508. An output terminal of the soft switch 508 is coupled to a data input terminal of a modulator 518. An output terminal of modulator 518 is coupled to a second input terminal of weighted adder 522 whose input signal is weighted by 1/2. An output terminal of the weighted adder 522 is coupled to an input terminal of low pass filter (LPF) 510. An output terminal of LPF 510 is coupled to output terminal 515. Output terminal 515 is coupled to D/A 110 (of Figure 2).

An output terminal of horizontal HPF 502 is coupled to an input terminal of a level detector 504. An output terminal of level detector 504 is coupled to a control input terminal of the soft switch 508. An output terminal of the horizontal LPF 512 is coupled to a second data input terminal of the soft switch 508.

An input terminal 525 is coupled to a source (not shown) of a folding carrier signal having a frequency f_{f}. Input terminal 525 is coupled to a clock signal input terminal of the modulator 518.

As described above, in prior art luminance signal folding systems, the luminance high frequencies are folded back into the luminance low frequencies at the same amplitude or higher. When played back on a VCR which had no provision for removing these folded high luminance frequencies, highly objectionable artifacts were present on reproduced images.

The combination of the horizontal HPF 502, level detector 504, horizontal LPF 512 and soft switch 508 forms an adaptive depeaker 506 which reduces the amplitude of the luminance high frequencies to a level such that if reproduced on a VCR which had no provision for removing them, the artifacts do not produce an unacceptable image. The adaptive depeaker 506 produces a depeaked luminance signal LD.

The adaptive depeaker operates in the following manner. Horizontal HPF 502 extracts the high frequency luminance component. The level of the luminance high frequencies is detected in the level detector 504. The level detector 504 operates in a known manner as an envelope detector to produce a signal which has the value of the maximum amplitude of the high frequency luminance signal.

Soft switch 508 may be constructed in a similar manner to the soft switch 214 (of Figure 3), including multipliers for scaling each data signal, an adder for summing the scaled data signals, and a look-up table for generating the scaling factors in response to the control signal.

The horizontal LPF 512 produces a signal in which the luminance high frequencies are attenuated relative to the luminance low frequencies. When the level of luminance high frequencies, as detected by level detector 504, is zero or nearly zero, then the high frequencies do not need to be attenuated, and the output signal LD from soft switch 508 is completely from input terminal 505 carrying the unfiltered luminance signal L. As the level of luminance high frequencies increases, the luminance high frequencies need to be attenuated. In this situation, the proportion of unfiltered luminance signal L decreases in the output signal LD from the soft switch 508 and the proportion of low pass filtered luminance signal increases. When the level of luminance high frequencies is maximum or nearly maximum, then the high frequencies need to be attenuated to the maximum extent and the output signal LD from soft switch 508 is completely from the horizontal LPF 512. The values of K and 1-K (as illustrated in Figure 5, and discussed in the corresponding text) are selected to perform the above described depeaking operation.

The depeaked luminance signal LD is then modulated about the folding carrier having a frequency f_{f} in modulator 518. The folding frequency is selected so as to maximize the distance between the folding carrier and the baseband luminance signal in the temporal, vertical and horizontal directions. The folding carrier is preferably placed at one-half the maximum vertical frequency, and one-half the maximum temporal frequency (i.e. in the so-called Fukinuki hole) in the temporal and vertical dimensions, and at about 5 MHz in the horizontal directions. This maximizes the spectral distance between the folding carrier and the vertical and temporal lower frequency components of the luminance signal.

Modulator 518 may be a standard four quadrant multiplier, or, if the sampling frequency is properly selected, a +1,-1 type modulator. A +1,-1 type modulator modulates a sampled signal by a frequency equal to one-half the sampling frequency by arithmetically negating every other sample. For example, if the sampling frequency is selected to be at about 10 MHz, then the folding frequency will be about 5 MHz, with the actual frequency selected so as to satisfy the above criteria relating to vertical and temporal spectral distance from vertical and temporal DC. The output signal contains a component of one-half the sampling frequency, and upper and lower sidebands centered around one-half the sampling frequency containing the spectral information contained in the input signal.

Such a modulator, having data input and output terminals and a clock input terminal, may be constructed using a multiplexer having a first data input terminal coupled to the data input terminal of the modulator. An arithmetic negator is also coupled to the data input terminal of the modulator. An output terminal of the arithmetic negator is coupled to a second data input terminal of the multiplexer. An output terminal of the multiplexer is coupled to the output terminal of the modulator. A folding clock signal, which has a frequency equal to one-half the sampling clock frequency, is coupled to the clock input terminal of the modulator, which is coupled to the control input terminal of the multiplexer. This signal alternates between a logic '1' value and a logic '0' value at the sampling frequency, and may be generated by a flip-flop coupled to the sampling clock signal.

In operation, when the folding clock signal is a logic '1' signal, then the multiplexer couples the non-negated signal from the input terminal of the modulator to its output terminal. When the folding clock signal is a logic '0' signal, then the multiplexer couples the negated signal from the arithmetic negator to its output terminal. In this fashion, a modulated signal is reproduced. The lower sideband of the modulated signal contains a spectral image of the 4.2 MHz bandwidth depeaked luminance signal but inverted in frequency. That is, the depeaked luminance signal is folded about the folding frequency -- low depeaked baseband luminance frequencies are folded into the neighborhood of 5 MHz, and high depeaked baseband luminance frequencies of 4.2 MHz, for example, are folded into the neighborhood of 800 kHz.

The folded depeaked luminance signal is then combined with the baseband luminance signal in weighted adder 522. This composite signal is then low pass filtered by LPF 510, which has a passband narrow enough to eliminate all of the signal which would not pass through the narrow-band channel. For a VCR, the passband of LPF 510 would be about 2.5 MHz.

The horizontal HPF 502 and horizontal LPF 512 are both responsive to the same luminance signal L and may share delay line elements in the same manner as the filters 202 and 204 share common delay line elements, as illustrated in Figures 4a and 4b. One skilled in the art of video signal processor design would understand how to design such filters sharing delay line elements.

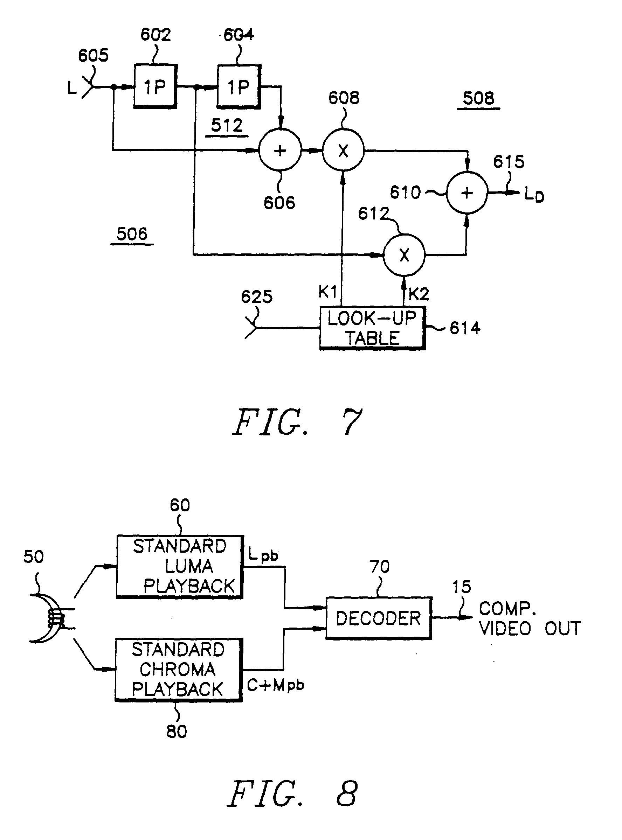

Figure 7 is an alternative embodiment of a portion of the adaptive depeaker 506 illustrated in Figure 6. In Figure 7, an input terminal 605 is coupled to the output terminal of the adaptive luminance signal separator 104 (of Figure 2). Input terminal 605 is coupled to a first input terminal of an adder 606 and an input terminal of serially coupled single pixel period (1P) delay devices 602 and 604. An output terminal of 1P delay device 602 is coupled to a first input terminal of a multiplier 612. An output terminal of multiplier 612 is coupled to a first input terminal of an adder 610. An output terminal of adder 610 is coupled to an output terminal 615. Output terminal 615 is coupled to the input terminal of the modulator 518 (of Figure 6).

An output terminal of 1P delay device 604 is coupled to a second input terminal of adder 606. An output terminal of adder 606 is coupled to a first input terminal of multiplier 608. An output terminal of multiplier 608 is coupled to a second input terminal of adder 610.

An input terminal 625 is coupled to the output terminal of level detector 504 (of Figure 6). Input terminal 625 is coupled to an input terminal of a look-up table 614 (which may also be implemented in a ROM, as described above). First and second output terminals of look-up table 614 are coupled to respective second input terminals of multipliers 608 and 612.

The operation of the portion of the depeaker 506 illustrated in Figure 7 differs from that illustrated in Figure 6 in the cooperation between the soft switch 508 and the horizontal LPF 512. In a depeaker, the level of the high frequencies in the input signal is lowered in the output signal. In the embodiment illustrated in Figure 6, this is done by varying the proportion of low pass filtered luminance signal and unfiltered luminance signal in the output signal LD. In Figure 7, the horizontal LPF 512 and the soft switch 508 share adders 606 and 610.

In a standard three tap low pass comb filter, the input and output taps of the serially coupled delay devices each receive a weight of 1/4, and the center tap receives a weight of 1/2 before they are added together to generate the low pass filtered signal. In the case of a depeaker, some proportion of the center tap signal, representing the unfiltered input signal, suitably delayed for combination with the low pass filtered signal, is added to the low pass filtered signal. These two operations may be performed by the same scaling and combining elements.

Adder 606 sums the input and output taps of the serially coupled delay devices. (It makes no difference whether each of the input and output taps are weighted by 1/4 then they are summed, or the input and output taps are summed then the sum is weighted by 1/4). This sum is then weighted by the multiplier 608, which receives weighting factor K1 from the look-up table 614. The center tap is weighted by multiplier 612, which receives weighting factor K2 from the look-up table 614. These wighting factors are not related by K2 being equal to 1-K1, as in the soft switch illustrated in Figure 5.

Instead, when a zero or low level of luminance high frequencies is detected by level detector 504 (of Figure 6), then the unfiltered luminance signal is desired. In this case scaling factor K1 is zero and scaling factor K2 is one. The sum of the scaled signals is produced by adder 610, which, in this case, is the unfiltered luminance signal L. When a maximum or nearly maximum level of luminance high frequencies is detected by level detector 504, then the low pass filtered luminance signal is desired. In this case scaling factor K1 is 1/4 and scaling factor K2 is 1/2. As the level of luminance high frequencies gradually increases from zero to maximum, scaling factor K1 changes in a continuous manner from one to 1/2, and scaling factor K2 changes in a continuous manner from zero to 1/4. In this manner, the output signal of the adaptive peaker has the proportions of unfiltered and low pass filtered luminance signals gradually varied in a continuous manner in response to the level of luminance high frequencies.

In the above description, the response characteristic of the three tap low pass comb filter was a simple raised cosine. Different weighting factors could be preprogrammed into a ROM implementation of the look-up table 614 to implement different response characteristics for the low pass comb filter 512. In addition, the widths of the deadbands at the zero and maximum luminance high frequency levels, and the characteristic of the continuous change in proportions of the unfiltered and low pass filtered luminance signal in response to the level of luminance high frequencies may be varied.

The apparatus described above may be used to record a full-bandwidth video signal on a standard video cassette, which may then be played back on a standard VCR, without objectionable artifacts. Apparatus described below may be used for extracting the luminance high frequencies folded into the luminance low frequencies and regenerating the full bandwidth video signal upon playback of such a previously recorded video cassette.

Figure 8 is a block diagram of one example of a playback system in accordance with the present invention. In Figure 8, a playback head 50 is incorporated in a standard tape transport (not shown) of a standard VCR. Playback head 50 is coupled to respective input terminals of a luminance signal playback circuit 60 and a chrominance signal playback circuit 80. An output terminal of luminance signal playback circuit 60 is coupled to a first input terminal of a decoder 70, and an output terminal of chrominance signal playback circuit 80 is coupled to a second input terminal of decoder 70. An output terminal of decoder 70 is coupled to an output terminal 15. Output terminal 15 is coupled to utilization circuitry (not shown) which may be, for example, a television receiver for reproducing the images previously recorded on the video cassette, or a Y-C output jack such as is in a super-VHS VCR.

In operation, playback head 50 supplies its signal to both the luminance playback circuit 60 and the chrominance playback circuit 80, in a known manner. The previously recorded folded luminance signal occupies a band of frequencies at about 1.4 - 5.9 MHz, and a previously recorded chrominance plus motion signal occupies a 1 MHz band of frequencies at around 629 kHz. The luminance playback circuitry processes the folded luminance signal in the usual manner to produce the playback folded luminance signal Lpb. The chrominance playback circuitry processes the chrominance plus motion signal to produce the playback chrominance plus motion signal C+M_{pb}. These signals are then processed by the decoder 70 which extracts the motion signal from the chrominance signal, and uses it to assist in unfolding the folded high frequency luminance component and reconstructing the full bandwidth luminance signal. The reconstructed full bandwidth luminance signal and the chrominance signals are then combined to form a composite video signal at output terminal 15.

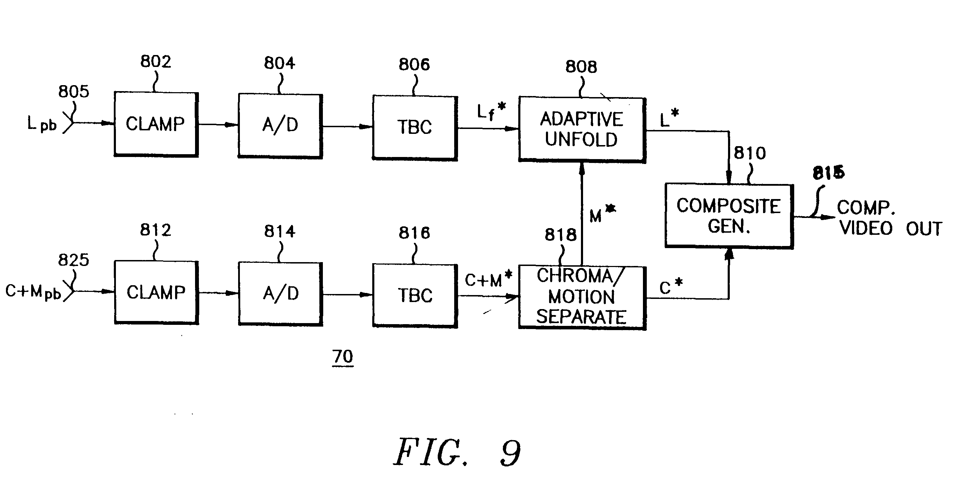

Figure 9 is a more detailed block diagram of the decoder 70 illustrated in Figure 8. In Figure 9, an input terminal 805 is coupled to the output terminal of luminance playback circuit 60 (of Figure 8). Input terminal 805 is coupled to an input terminal of a clamping circuit 802. An output terminal of clamping circuit 802 is coupled to an input terminal of an analog-to-digital converter (A/D) 804. An output terminal of A/D 804 is coupled to an input terminal of time base corrector (TBC) 806. An output terminal of TBC 806 is coupled to a data input terminal of an adaptive unfolding circuit 808. An output terminal of adaptive unfolding circuit 808 is coupled to a first input terminal of a composite video signal generator 810. An output terminal of composite video signal generator 810 is coupled to an output terminal 815. Output terminal 815 is coupled to utilization circuitry (not shown) which, for example, may be a television receiver for reproducing the images which were previously recorded on the cassette or a Y-C output jack.

An input terminal 825 is coupled to the output terminal of the chrominance playback circuit 80 (of Figure 8). Input terminal 825 is coupled to an input terminal of a clamping circuit 812. An output terminal of clamping circuit 812 is coupled to an input terminal of an analog-to-digital converter (A/D) 814. An output terminal of A/D 814 is coupled to an input terminal of a time base corrector (TBC) 816. An output terminal of TBC 816 is coupled to an input terminal of a chrominance/motion signal separator 818. A first output terminal of the chrominance/motion signal separator 818 is coupled to a second input terminal of the composite video signal generator 810. A second output terminal of the chrominance/motion signal separator 818 is coupled to a control input terminal of the adaptive unfolding circuit 808.

In operation, the upper elements in Figure 9 operate to extract the full-bandwidth luminance signal from the reduced bandwidth luminance signal previously recorded on the cassette. Clamp 802 operates in a known manner to clamp the black level of the recovered luminance signal to a predetermined digital value in the A/D 804. For example, the black level could be clamped to a digital signal of 16, for an A/D which has a dynamic range of from 0 to 255. A/D 804 produces a sampled multibit digital signal representing the playback folded luminance signal. The TBC 806 operates to correct any timing inaccuracies which are introduced by jitter in the tape mechanism or any other source of timing inaccuracy, and produces the recovered folded luminance signal L_{f}* (where * indicates a playback signal representing the same signal as previously recorded on the cassette).

The lower elements in Figure 9 operate to extract the chrominance plus motion signal previously recorded on the cassette. The chrominance plus motion signal is a bidirectional signal, so the zero voltage of this signal is clamped to a digital signal of 128 out of 255 in clamping circuit 812. The A/D 814 produces a sampled multibit digital signal representing the chrominance plus motion signal and the TBC 816 operates to correct any timing inaccuracies in this signal, and produces the recovered chrominance plus motion signal C+M*.

When recorded, the chrominance signal and the luminance were in phase synchronism. However, they are passed through two separate independent paths in the record circuitry (illustrated in Figure 1) and are frequency division multiplexed on the cassette. This separate processing may introduce phase inaccuracies between the two signals which are not compensated for in the two separate TBCs 806 and 816. The above-mentioned Patent Application GB 91 10020.6 (Publication No. GB 2 246 264 A) describes in detail apparatus for restoring the proper phase relationship between the chrominance and luminance signals.

Chrominance/motion separator 818 processes the recovered chrominance plus motion signal C+M* to produce a recovered motion signal M*, which is supplied to the control input terminal of the adaptive unfolding circuit 808, and chrominance signal C*, which is supplied to the chrominance signal input terminal of the composite video signal generator 810. The above-mentioned Patent Application GB 91 10020.6 (Publication No. GB 2 246 264 A) describes in detail a chrominance/auxiliary signal separator which may be used as chrominance/motion signal separator 818, and this circuit will not be described in more detail here.

The adaptive unfolding circuit 808 unfolds the luminance high frequencies which were previously folded into the luminance low frequencies, and restores the full bandwidth luminance signal L*. This full bandwidth signal L* is supplied to the luminance signal input terminal of the composite video signal generator 810. Composite video signal generator 810 operates in a known manner to combine the luminance signal L* and chrominance signal C* to form a standard composite video signal. This signal may be used by any equipment which utilizes such a signal, for example, a television receiver.

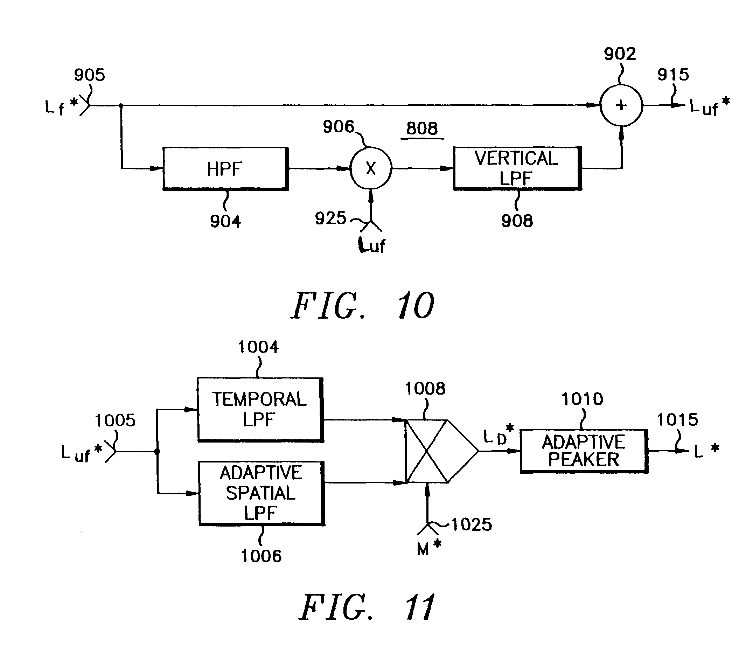

Figure 10 is one example of a more detailed block diagram of a portion of the adaptive unfolding circuit 808 as illustrated in Figure 9. In Figure 10, an input terminal 905 is coupled to an output terminal of the time base corrector 806 (of Figure 9). Input terminal 905 is coupled to an input terminal of a high pass filter (HPF) 904 and a first input terminal of an adder 902. An output terminal of adder 902 is coupled to an output terminal 915. Output terminal 915 produces the unfolded luminance signal Lu_{f}, which is supplied to the remainder of the adaptive unfolding circuit illustrated in Figure 11 (below).

An output terminal of HPF 904 is coupled to an input terminal of a modulator 906. An output terminal of modulator 906 is coupled to an input terminal of a vertical low pass filter (LPF) 908. An output terminal of vertical LPF 908 is coupled to a second input terminal of adder 902. An input terminal 925 is coupled to a source (not shown) of an unfolding carrier signal L_{uf}. Input terminal 925 is coupled to a second input terminal of modulator 906.

In operation, input signal L_{f}* is the limited bandwidth folded luminance signal. The horizontal HPF 904 filters out the frequencies below the folded luminance signal containing the chrominance information. When the sideband luminance signal is folded around the folding carrier at about 5 MHz by the record circuitry, the highest frequency luminance signal, at about 4.2 MHz is folded to about 800 kHz. Thus, the break frequency of the horizontal HPF is preferably about 750 kHz. This high pass filtered signal is then unfolded around the unfolding frequency which is about 5 MHz (where the actual frequency is selected in accordance with the criteria described above in the description of modulator 518 (of Figure 6)) by the modulator 906. As is the case with modulator 518 (of Figure 6), modulator 906 may be constructed in a known manner using a four quadrant multiplier, or may be a +1,-1 type modulator using a clock signal at one half the sampling frequency, which in this example may be at about 10 MHz.

The demodulated signal from modulator 906 is then filtered by the vertical LPF 908. The processing performed by vertical LPF 908 may also be described as averaging, which increases the signal-to-noise ratio of the resulting signal. This signal is added to the received folded luminance signal L_{f}* from input terminal 905 in adder 902. The resulting unfolded signal Luf* consists of a full bandwidth unfolded luminance signal centered around temporal, vertical and horizontal DC, and an image of the full bandwidth luminance signal centered about the unfolding carrier which has frequency at one-half the maximum temporal frequency, one-half the maximum vertical frequency and at a horizontal frequency of about 5 MHz. This image of the luminance signal must be removed.

Figure 11 is a more detailed block diagram of one example of a second portion of the adaptive unfolding circuit 808 illustrated in Figure 9. In Figure 11, an input terminal 1005 is coupled to the output terminal of adder 902 (of Figure 10). Input terminal 1005 is coupled to respective input terminals of a temporal low pass filter LPF 1004 and an adaptive spatial LPF 1006. An output terminal of temporal LPF 1004 is coupled to a first data input terminal of soft switch 1008. An output terminal of soft switch 1008 is coupled to an input terminal of an adaptive peaker circuit 1010. An output terminal of adaptive peaker circuit 1010 is coupled to an output terminal 1015. Output terminal 1015 is coupled to the luminance signal input terminal of the composite video signal generator 810 (of Figure 9).

An output terminal of adaptive spatial LPF 1006 is coupled to a second data input terminal of soft switch 1008. An input terminal 1025 is coupled to the motion signal output terminal of the chrominance/motion signal separator 818 (of Figure 9). Input terminal 1025 is coupled to a control input terminal of soft switch 1008.

As described above with respect to the folding carrier, the unfolding carrier frequency is selected to maximize the distance between the baseband luminance signal and the luminance image signal in the temporal, vertical and horizontal directions. But the spectral characteristics of the recorded luminance signal affect the spectral shape of the unfolded luminance signal and the image signal. Thus, the spectral characteristics of the recorded luminance signal must be used to adaptively filter out the image signal and leave only the full bandwidth unfolded luminance signal.

When the level of motion is low, the unfolded luminance signal lies at temporal low frequencies (close to temporal DC), and the luminance image signal lies close in the temporal direction to the unfolding carrier, which was selected to be far away from temporal DC. In the presence of motion, the luminance signal occupies a wider temporal bandwidth. In this case the image may overlap temporally with the unfolded luminance signal, and the image must be removed spatially.

Adaptive spatial LPF 1006 operates to adaptively spatially separate the unfolded luminance signal from the luminance image signal by adaptively spatially filtering the unfolded luminance signal Luf*. The above-mentioned Patent Application GB 91 09732.9 (Publication No. GB 2 246 926 A) describes in more detail an adaptive spatial LPF which may be used as the adaptive spatial LPF 1006 in Figure 10, and it will not be discussed in more detail here.

Soft switch 1008 controls the proportion of the temporally separated and adaptively spatially separated unfolded full bandwidth luminance signals to be included in the unfolded luminance signal in response to the recovered motion control signal M*. When the level of motion is zero or nearly zero, the output of the soft switch 1008 is completely from the temporal LPF 1004. As the magnitude of motion gradually increases, the proportion of the input from the temporal LPF 1004 decreases and the proportion of the input from the adaptive spatial LPF 1006 increases. In the presence of relatively high levels of motion, the output from the soft switch 1008 is from the adaptive spatial LPF 1006.

The output from soft switch 1008 is a depeaked luminance signal LD*. (This signal was depeaked to attenuate the luminance high frequencies to allow for backward compatibility.) This signal is then adaptively peaked in adaptive peaker circuit 1010. Adaptive depeaker 506 (of Figures 6 or 7) operated to provide no depeaking when the high frequency component of the luminance signal was zero or nearly zero, and provided maximum depeaking when the high frequency component was at a relatively high level. Conversely, when the level of the high frequency component of the depeaked luminance signal is zero or nearly zero, then no depeaking was performed and no peaking is necessary. When the level of the high frequency component of the depeaked luminance signal is higher, then some depeaking was performed and some peaking is necessary.

In a peaker, some amount of the high frequency portion of a signal is added back to a signal. In this case a peaker must be used to boost the attenuated luminance high frequencies to restore them to their original level before the attenuation.

Adaptive peaker 1010 may be constructed in a similar manner as the adaptive depeaker 506 (of Figures 6 or 7). In one embodiment of an adaptive peaker derived from the depeaker circuit of Figure 6, a horizontal high pass filter may be substituted for the horizontal low pass filter 512. In this embodiment, the frequency characteristics of the luminance high frequency detector HPF (502) may be different from the frequency characteristics of the peaking HPF (512). In a second embodiment, the horizontal LPF 512 may be eliminated and the output terminal of the horizontal HPF 502 may also be coupled to the second input terminal of the soft switch 508. In a third embodiment, the circuit illustrated in Figure 7 may be modified to perform this function.

Figure 7 illustrates a combination of a horizontal comb filter 512 and soft switch 508. In the description of Figure 7, the scaling factors K1 and K2 from lookup table 614 supplied to the multipliers 608 and 612 were selected to have the comb filter 512 perform as a low pass filter. However, the look-up table 614 may alternatively be preprogrammed to have the comb filter 512 perform as a high pass filter. A standard three tap high pass filter exhibiting a raised cosine frequency response has the outer taps weighted by -1/4 and the center tap weighted by +1/2. Thus if the look-up table 614 were properly preprogrammed, the comb filter 512 could operate as a high pass filter.

Referring now to Figure 6, in the presence of zero high frequencies in the reconstructed luminance signal LD*, the level detector 504 generates a zero valued signal. In the presence of a maximum level of high frequencies, level detector 504 generates a maximum signal. Referring again to Figure 7, when the detected level of the high frequency component of the depeaked signal is relatively high, then the high pass filtered reconstructed luminance signal is passed to the output terminal. In this case, the scaling factor K1 is-1/4 and the scaling factor K2 is 1/2, and the high frequencies are boosted relative to the low frequencies. As the level of the high frequency component of the depeaked luminance signal gradually decreases, the proportion of high pass filtered depeaked luminance signal is decreased in a continuous manner, and the proportion of unfiltered depeaked luminance signal is increased in a continuous manner. When the detected level of the high frequency component of the depeaked luminance signal is zero or nearly zero, then the unfiltered depeaked luminance signal is passed to the output terminal. In this case, the scaling factor K1 is zero and the scaling factor K2 is one, and no boost is provided. By properly preprogramming the look-up table 614, the adaptive peaking may be made the inverse operation of the adaptive depeaking carried out in the record channel. However, it may be desirable that the maximum level of boost applied to the depeaked luminance signal be limited to a lesser value than the maximum value theoretically necessary to completely reconstruct the original luminance signal.

During recording it is possible to derive a motion signal for adaptive chrominance/luminance signal separation from the input composite video signal itself. False motion may be introduced by the chrominance signal, but the false motion in the chrominance/luminance signal separator can be eliminated by vertically and horizontally low pass filtering the temporally high pass filtered signal. Because the chrominance sidebands do not extend down below 2 MHz, horizontal filtering ensures that false motion is removed.

As described above, the luminance high frequencies are folded into the low frequency luminance signal by modulating them on a folding carrier and placing this carrier in the Fukinuki hole, similar to the manner in which the chrominance subcarrier is placed in the composite video signal. However, there are no restrictions on the lower sidebands of the folded luminance high frequencies. In fact, diagonal detail in the full bandwidth luminance signal, when folded into the luminance low frequencies can extend all the way down to spatial DC. Because the folding carrier is alternating on a frame-to-frame basis (to maximize the temporal distance from DC) these diagonal details incorrectly get detected as false motion and no degree of spatial filtering can remove this false motion detection. Thus, to properly remove the reflected luminance signal from the unfolded luminance signal on playback, it is necessary to supply a separate channel for the motion representative signal.

One skilled in the art of video signal processor design will recognize that providing a separate channel for supplying the motion representative signal to the playback circuitry allows the motion adaptive luminance reconstruction process in the playback circuitry to mimic the motion adaptive processing of the chrominance/luminance signal separator in the record circuitry. For example, if the chrominance/luminance signal separator in the record circuitry chose temporal processing in some region of the image to derive the luminance signal, it would be incorrect to choose spatial processing to reconstruct the full bandwidth luminance signal in the same region of the image.

Further, the chrominance/luminance signal separation process, no matter how well done, introduces some artifacts into the image. The full bandwidth luminance signal reconstruction process also introduces artifacts into the image. If the second process is independent of the first process, then the artifacts introduced by the upstream process have artifacts introduced upon them by the downstream process, intensifying them. Artifact intensification can be greatly reduced if the downstream processing can be forced to follow the upstream processing. Providing a separate channel for the motion representative signal allows for both the above improvements.

It should be further noted that in a single VCR, there are some circuits which may be shared between the record channel and the playback channel. For example, modulators 518 and 902 may be a single modulator shared by use of an appropriate switching matrix, which may be constructed in a known manner. In addition, the adaptive depeaker 506 and the adaptive peaker 910 may be a single circuit shared by use of an appropriate switching matrix. This switching matrix also must either switch between two separate look-up tables, one (614) for the depeaker 506 and a separate one for the peaker 910, or alternatively a signal look-up table may have a separate bit in the address input port of the ROM which effectively divides the storage locations in the ROM into two halves and indicates which half is to be used for the current operation -- depeaking for recording or peaking for playback.

The above illustrated embodiments of the invention, which are given by way of example only, may provide a signal processing system for a VCR which yields improved video quality while maintaining backward compatibility for playing back video cassettes recorded by this improved system on current VCRs.

## Claims

1. A video signal processing system for recording a wide bandwidth video signal on a limited bandwidth recording medium, said system comprising:
band filtering means (502, 512) for receiving a video signal including at least a wide bandwidth luminance signal having low frequency and high frequency luminance components, and for producing therefrom a low frequency luminance band component having a bandwidth limited to a limited bandwidth and a high frequency luminance band component,
adaptive depeaking means (504, 508) for decreasing the amplitude of said high frequency luminance band component according to the amplitude thereof to such an extent that reproduced artefacts do not produce an unacceptable image and
means (518, 522) for modulating said high frequency luminance band component into a spectrum of said low frequency luminance band component.

2. A video signal processing system according to claim 1 wherein said depeaking means comprises:
gain control signal generating means (504) for generating a depeaking gain control signal which varies in monotonically decreasing relation to a level of said high frequency luminance band component, and
depeaking gain control means (508) for attenuating an amplitude of said high frequency luminance band component in accordance with said depeaking gain control signal.

3. A video signal processing system having decoder means (70) for converting a limited bandwidth folded video luminance signal into a wide bandwidth unfolded video luminance signal, said limited bandwidth luminance signal including a low frequency luminance band component having a bandwidth limited to said limited bandwidth and a high frequency luminance band component folded into a spectrum of said low frequency band component, said decoder means (70) further processing motion information (M*), comprising:
means (906, 902) for unfolding the limited bandwidth folded video luminance signal to provide therefrom an unfolded baseband luminance signal having a bandwidth greater than said limited bandwidth and containing the low frequency video luminance signal and the high frequency luminance band component unfolded from said limited bandwidth video luminance signal,
means (1004, 1006, 1008) for temporally or spatially filtering the unfolded luminance signal in response to said motion information (M*) and
adaptive peaking means (1010) for increasing said unfolded luminance high frequency band component in amplitude by an amount depending upon a magnitude thereof to restore the original amplitude.

## Patentansprüche

1. Videosignalverarbeitungssystem zur Aufnahme eines breitbandigen Videosignals auf einem Aufzeichnungsmedium mit begrenzter Bandbreite, wobei das System umfaßt:
eine Bandfilterungseinrichtung (502, 512) zum Empfangen eines Videosignals mit zumindest einem breitbandigen Luminanzsignal, das niederfrequente und hochfrequente Luminanzkomponenten umfaßt, und zum Erzeugen einer niederfrequenten Luminanzbandkomponente mit einer Bandbreite, die auf die begrenzte Bandbreite beschränkt ist, und einer hochfrequenten Luminanzbandkomponente daraus,
eine adaptive Abschwächungseinrichtung (504, 508) zur Abschwächung der Amplitude der hochfrequenten Luminanzbandkomponente gemäß ihrer Amplitude in dem Umfang, dass wiedergegebe Artefakte kein unakzeptables Bild erzeugen, und
eine Einrichtung (518, 522) zum Modulieren der hochfrequenten Luminanzbandkomponente in ein Spektrum der niederfrequenten Luminanzbandkomponente.

2. Videosignalverarbeitungssystem nach Anspruch 1, wobei die Abschwächungseinrichtung umfaßt:
eine Verstärkungsfaktorsteuersignalerzeugungseinrichtung (504) zur Erzeugung eines Abschwächungsverstärkungsfaktorsteuersignals, das in monoton abnehmendem Verhältnis zum Pegel der hochfrequenten Luminanzbandkomponente variiert, und
eine Abschwächungsverstärkungsfaktorsteuereinrichtung (508) zur Abschwächung einer Amplitude der hochfrequenten Luminanzbandkomponente in Übereinstimmung mit dem Abschwächungsverstärkungsfaktorsteuersignal.

3. Videosignalverarbeitungssystem mit einer Dekodiereinrichtung (70) zur Umwandlung eines gefalteten Videoluminanzsignals mit begrenzter Bandbreite in ein breitbandiges, ungefaltetes Videoluminanzsignal, wobei das Luminanzsignal mit begrenzter Bandbreite eine niederfrequente Luminanzbandkomponente mit einer Bandbreite, die auf die begrenzte Bandbreite beschränkt ist, und eine hochfrequente Luminanzbandkomponente umfaßt, die in ein Spektrum der niederfrequenten Bandkomponente gefaltet ist, wobei die Dekodiereinrichtung (70) außerdem Bewegungsinformation (M*) verarbeitet, umfassend:
eine Einrichtung (906, 902) zur Rückfaltung des gefalteten Videoluminanzsignals mit begrenzter Bandbreite, um daraus ein ungefaltetes Basisbandluminanzsignal bereitzustellen, das eine Bandbreite besitzt, die größer als die begrenzte Bandbreite ist, und das das niederfrequente Videoluminanzsignal und die hochfrequente Luminanzbandkomponente umfaßt, die von dem Videoluminanzsignal mit begrenzter Bandbreite rückgefaltet ist,
eine Einrichtung (1004, 1006, 1008) zur zeitlichen oder räumlichen Filterung des ungefalteten Luminanzsignals in Abhängigkeit von der Bewegungsinformation (M*) und
eine adaptive Anhebungseinrichtung (1010) zur Anhebung der ungefalteten hochfrequenten Luminanzbandkomponente in der Amplitude um einen Betrag, der von ihrer Größe abhängt, um die ursprüngliche Amplitude wiederherzustellen.

## Revendications

1. Système de traitement de signaux vidéo pour enregistrer un signal vidéo à grande largeur de bande sur un support d'enregistrement à largeur de bande limitée, ledit système comportant :
des moyens de filtrage de bande (502, 512) pour recevoir un signal vidéo comportant au moins un signal de luminance à grande largeur de bande ayant des composantes de luminance à basse fréquence et à haute fréquence, et pour produire à partir de celui-ci une composante de bande de luminance à basse fréquence ayant une largeur de bande limitée à une largeur de bande limitée et une composante de bande de luminance à haute fréquence,
des moyens adaptatifs (504, 508) d'abaissement des pics d'amplitude de ladite composante de bande de luminance à haute fréquence conformément à l'amplitude de celle-ci sur une étendue telle que des artefacts reproduits ne produisent pas une image inacceptable, et
des moyens (518, 522) pour moduler ladite composante de bande de luminance à haute fréquence en un spectre de ladite composante de bande de luminance à basse fréquence.

2. Système de traitement de signaux vidéo selon la revendication 1, dans lequel lesdits moyens d'abaissement des pics comportent :
des moyens de génération de signal de commande de gain (504) pour générer un signal de commande de gain d'abaissement des pics qui varie selon une relation décroissante monotone par rapport à un niveau de ladite composante de bande de luminance à haute fréquence, et
des moyens de commande de gain d'abaissement des pics (508) pour atténuer une amplitude de ladite composante de luminance à haute fréquence conformément audit signal de commande de gain d'abaissement des pics.

3. Système de traitement de signaux vidéo ayant des moyens de décodage (70) pour convertir un signal de luminance vidéo replié à largeur de bande limitée en un signal de luminance vidéo déplié à grande largeur de bande, ledit signal de luminance à largeur de bande limitée comportant une composante de bande de luminance à basse fréquence ayant une largeur de bande limitée à ladite largeur de bande limitée et une composante de bande de luminance à haute fréquence repliée en un spectre de ladite composante de bande à basse fréquence, lesdits moyens de décodage (70) traitant de plus des informations de mouvement (M*), comportant :
des moyens (906, 902) pour déplier le signal de luminance vidéo replié à largeur de bande limitée afin de délivrer à partir de celui-ci un signal de luminance en bande de base déplié et ayant une largeur de bande supérieure à ladite largeur de bande limitée et contenant le signal de luminance vidéo à basse fréquence et la composante de bande de luminance à haute fréquence dépliée à partir dudit signal de luminance vidéo à largeur de bande limitée,
des moyens (1004, 1006, 1008) pour filtrer temporellement ou spatialement le signal de luminance déplié en réponse auxdites informations de mouvement (M*), et
des moyens de relèvement de fréquences adaptatifs (1010) pour augmenter ladite composante de bande de luminance à haute fréquence dépliée en termes d'amplitude d'une quantité qui est fonction de l'amplitude de celle-ci pour rétablir l'amplitude d'origine.
